(19) Europäisches Patentamt
European Patent Office
Office européen des brevets

(11) **EP 3 185 570 A1**

(12) **EUROPEAN PATENT APPLICATION**

(43) Date of publication:
**28.06.2017 Bulletin 2017/26**

(51) Int Cl.:
*H04N 21/434* (2011.01)  *G06T 5/00* (2006.01)
*H04N 21/81* (2011.01)  *H04N 21/845* (2011.01)
*H04N 19/46* (2014.01)  *G11B 27/30* (2006.01)
*H04N 5/14* (2006.01)  *H04N 19/142* (2014.01)

(21) Application number: **15307095.8**

(22) Date of filing: **22.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **DEMARTY, Claire-Hélène**
  **35576 Cesson-Sévigné (FR)**
• **OISEL, Lionel**
  **35576 Cesson-Sévigné (FR)**
• **CHEVALLIER, Louis**
  **35576 Cesson-Sévigné (FR)**

(74) Representative: **Huchet, Anne**
  **TECHNICOLOR**
  **1-5, rue Jeanne d'Arc**
  **92130 Issy-les-Moulineaux (FR)**

(54) **METHOD AND APPARATUS FOR TRANSMISSION-BASED SMOOTHING OF RENDERING**

(57)    Metadata-based video enhancements may be used to enhance video in various different ways by affecting different aspects of video at rendering time (e.g., color, transitions, blur, sharpness, object identification, etc.). Smoothing functions (240) based on transitions between successive video segments and/or types of metadata are applied (350) to successive metadata to remove flickering that can occur with metadata-based enhancement at rendering time.

FIG. 2

**Description**

BACKGROUND

Video on demand (VOD) may be transmitted in different formats to various different devices (e.g., television sets, computers, mobile devices, etc.). Each device may have different display criteria and capabilities for rendering content and may also face limitations in the bandwidth available to receive such content. Accordingly, different devices may require different encoded streams of the same content for standard and/or high quality presentation at the device.

One solution to deliver VOD content using a common stream to various different devices is to transmit content with associated metadata. This metadata may be used to enhance the quality of received content based on various criteria. For example, a device may receive metadata to enhance the VOD content for that particular device's capabilities (e.g., wider color space, higher resolutions, sharpening, etc.). In another scenario, metadata may be used to simply provide further efficiencies in a data stream by allowing a compressed video stream with lower bandwidths (e.g., broadcast channels) to be sent with associated metadata, where the metadata can be utilized during rendering to improve the quality of the images.

Accordingly, rendering at the device may greatly benefit from the use of content-based metadata. For example, metadata indicating the blur level of a given content may help adapt the sharpening process of content at rendering time. However, it may not always be possible to perform metadata extraction in some scenarios due to the introduction of latency in the process or because the device may not have the required computation power to extract the targeted metadata. When such a scenario occurs, visible flickering between video segments may be observed.

Thus, it must be appreciated that metadata-based enhancements consider possible latency and device capabilities and provide adequate information to reduce flickering.

SUMMARY

Some embodiments provide a method and apparatus for analyzing a first metadata for a first segments and a second metadata for a second segment, wherein the first segment and second segment are successive video segments. A smoothing function for the first metadata and the second metadata is determined and applied to the metadata to prevent flickering of transitions between video segments that use metadata-based enhancements. The adjusted metadata is provided for transmission with an encoded data stream.

The preceding Summary is intended to serve as a brief introduction to various features of some exemplary embodiments. Other embodiments may be implemented in other specific forms without departing from the scope of the disclosure.

BRIEF DESCRIPTION OF THE SEVERAL VIEWS OF THE DRAWINGS

The exemplary features of the disclosure are set forth in the appended claims. However, for purpose of explanation, several embodiments are illustrated in the following drawings.

**Figure 1** illustrates one embodiment of a process for metadata based rendering according to some embodiments;
**Figure 2** illustrates a temporal representation of successive video segments and a corresponding smoothing window according to some embodiments;
**Figure 3** illustrates an exemplary process some embodiments may use to smooth metadata-based enhancement;
**Figure 4** illustrates a schematic block diagram of an exemplary computer system used to implement some embodiments.

DETAILED DESCRIPTION

The following detailed description describes currently contemplated modes of carrying out exemplary embodiments. The description is not to be taken in a limiting sense, but is made merely for the purpose of illustrating the general principles of some embodiments, as the scope of the disclosure is best defined by the appended claims.

Various features are described below that can each be used independently of one another or in combination with other features. Broadly, some embodiments generally provide a method and apparatus to transmit and/or receive metadata in a data stream that achieves smooth video transitions. More particularly, when video is rendered with metadata-based enhancements, a method and apparatus is provides that applies smoothing between two successive segments in order to avoid flickering at rendering time.

Metadata-based video enhancements may be used to enhance video in various different ways by affecting different aspects of video at rendering time (e.g., color, transitions, blur, sharpness, object identification, etc.). Such metadata may be provided based on scene segments since different segments of video may require a great variation in types of metadata-based enhancements to perform. Since metadata can affect so many different aspects of video rendering and different metadata may be applied to different segments, there may be scenarios where processing of metadata-based enhancements introduce latency at rendering or computational power at the rendering device is inadequate to achieve the video enhancements. For example, one may consider that metadata-based enhancements for two successive segments may significantly vary depending on different values of a given characteristic before and after a segment transition.

For example, a sharpening enhancement applied at rendering time according to a blur level computed for each segment may significantly vary based on scene types. Accordingly, a blur level for a first segment may be different from blur level for the following segment. When transition between the two segments corresponds to a hard cut, having different blur levels and therefore having different levels of sharpening for successive segments may not greatly affect global rendering of the content. On the other hand, in case of a smooth transition, it may be beneficial to have a smooth evolution of the rendering from one segment to another to avoid flickering that may appear between segment transitions.

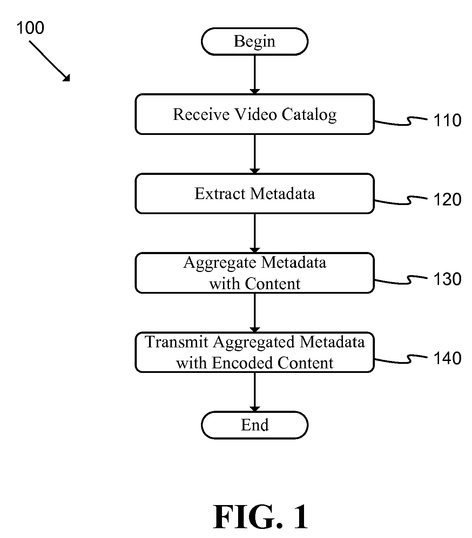

In some embodiments, the metadata may be pre-processed offline, aggregated to a corresponding encoded stream through supplemental enhancement information (SEI) messages, and finally exploited at the client side in the context of image enhancement. For example, in some embodiments the metadata would be used by an image enhancement module (i.e. hardware, software, and/or any combination thereof) on a client device to improve the quality of images. Therefore, associated image enhancement modules may complement the metadata extraction process, and enhancement processes and/or algorithms may be developed in conjunction with the development of metadata extraction. **Fig. 1** illustrates one embodiment of a process 100 for metadata based rendering according to some embodiments.

As illustrated in **Fig. 1,** an exemplary process 100 may first receive (at 110) a video catalog. This video catalog may include several pieces of content that may be transmitted to client devices as part of a VOD service, for example. The process 100 may then extract (at 120) metadata related to each piece of content in the video catalog. Once the metadata has been extracted, the metadata may be aggregated (at 130) with its corresponding piece of encoded content on a physical storage medium by the VOD service. For example, some embodiments may implement metadata aggregation via SEI messages. The process 100 may then transmit (at 140) the aggregated metadata with corresponding content to client devices. The client device may then be able to perform metadata based rendering of the content. Accordingly, depending on the computation power available at the client device, latency in rendering and/or processing of the metadata may occur leading to flickering in the rendered content.

According to some embodiments, metadata may be smoothed between two successive segments to avoid potential flickering at rendering time. The smoothing techniques applied by some embodiments may change according to both the smoothness of a transition between two successive segments and/or the type of metadata to smooth. Therefore, a determination of the type of transition may first be determined in order to analyze whether smoothing of metadata is required. In a first scenario, a hard cut may occur between two successive segments. In this scenario, it may not be necessary to apply smoothing techniques to the metadata. In a second scenario, the smoothness character of a transition may depend on the type of metadata. That is, one transition between two segments may be seen as a hard transition for some metadata and as a smoother transition for other metadata. For example, when considering gamut expansion, hard cuts may not be seen as "hard" or abrupt in the case where two successive segments before and after a transition still show the same scene with the same color characteristics.

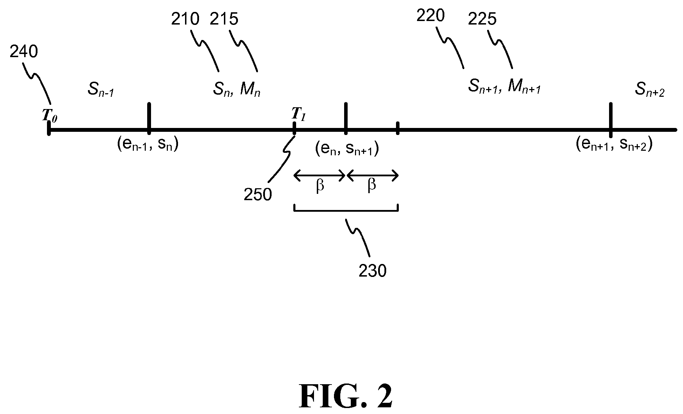

**Fig. 2** may be referenced to illustrate metadata smoothing techniques according to some embodiments. Specifically, **Fig. 2** illustrates a temporal representation of successive video segments and a corresponding smoothing window. As shown, two successive video segments $S_n$ 210 and $S_{n+1}$ 220 may be considered. $S_n$ 210 and $S_{n+1}$ 220 may include associated metadata $M_n$ 215 and $M_{n+1}$ 225. Metadata $M$ is used for a specific enhancement process at rendering time, e.g., $M$ may be some blur level that is used for further sharpening of content. Segment $S_n$ 210 corresponds to interval $[s_n, e_n]$ in frame numbers and segment $S_{n+1}$ 220 corresponds to interval $[s_{n+1}, e_{n+1}]$ in frame numbers, where $s_{n+1} = e_n + 1$. In this example, a smoothing window 230 of size $2\beta$ around the couple $(e_n, s_{n+1})$ is evaluated.

In some embodiments, sending metadata $M_{n+1}$ in an SEI message associated with $s_n$, for segment $S_n$ may provide smoothing of metadata enhancements. Specifically, for a first segment $S_0$, two pieces of metadata $M_0$ and $M_1$ which corresponding to the first and second segments may be sent with so. Alternatively, metadata $M_{n+1}$ may be sent at any time between the starting transmission of the content $T_0$ 240 and $T_1$ 250, where $T_1 = e_n - \beta$. Opting for $T_0$ may allow the receiver device to benefit from the maximal amount of time to prepare the data, whereas opting for $T_1$ 250 may give the receiver device a minimal amount of time possible. In any case, if the receiver starts receiving the stream of metadata just before $T_1$, access to metadata $M_{n+1}$ may be ensured which is not the case if metadata $M_{n+1}$ is sent at the beginning of the segment $s_{n+1}$. Therefore, some embodiments provide the technique to send metadata $M_{n+1}$ in the SEI message associated with $S_n$ rather than $S_{n+1}$.

Furthermore, some embodiments may compute and send a weight $\alpha_n$ that represents the smoothness of a transition between two segments (e.g., $S_n$ and $S_{n+1}$) with the first of the two segments (e.g., $S_n$). Smoothness may depend both on the transition types and on the characteristics that may be used for the enhancement at rendering time.

For example, as far as gamut expansion is concerned, some hard cuts may not be seen as "hard" in the case where both segments before and after the transitions still show the same scene with the same color characteristics. In the case where the scene segmentation corresponds to some classic shot segmentation, one example of weights $\alpha_n$ may be:

$$\begin{cases} \propto_n = 0 \; if \, transition == hard \; cut \\ \quad \propto_n = 1 \; otherwise \end{cases}$$

Since enhancements of rendering may be done at a frame level, some embodiments may apply a continuous smoothing between metadata $M_n$ and $M_{n+1}$ around the transition on a predefined window size, provided that metadata M can be smoothed. In other embodiments, a linear interpolation between metadata $M_n$ and $M_{n+1}$ may be used to implement smoothing provided that M is linear or can be approximated by some linear function. Embodiments where linear interpolation is used to smooth metadata M for segment $S_n$ may use the below calculations for Mt:
for $t$ in interval $[s_n, s_n + \beta]$,

$$M_t = M_n - \propto_{n-1} * (M_n - M_{n-1}) \left( \frac{t - (e_{n-1} + 1 - \beta)}{2\beta} \right)$$

For $t$ in interval $[e_n - \beta, e_n]$,

$$M_t = M_n + \propto_n * (M_{n+1} - M_n) \left( \frac{t - (e_n - \beta)}{2\beta} \right)$$

Although these above examples are provided, this disclosure is not limited to only continuous or linear smoothing techniques. For example, other more complicated and nonlinear smoothing techniques may be used as alternatives (e.g., geometric functions such as $\sqrt{M_n * M_{n+1}}$ ). Some embodiments may also be smoothed according to custom functions. In the case of custom functions, each metadata custom merging function may be selected by some identification that may also be sent through the SEI messages together with the metadata, provided that each identification corresponds to a choice in a list of predefined functions available at the receiver device.

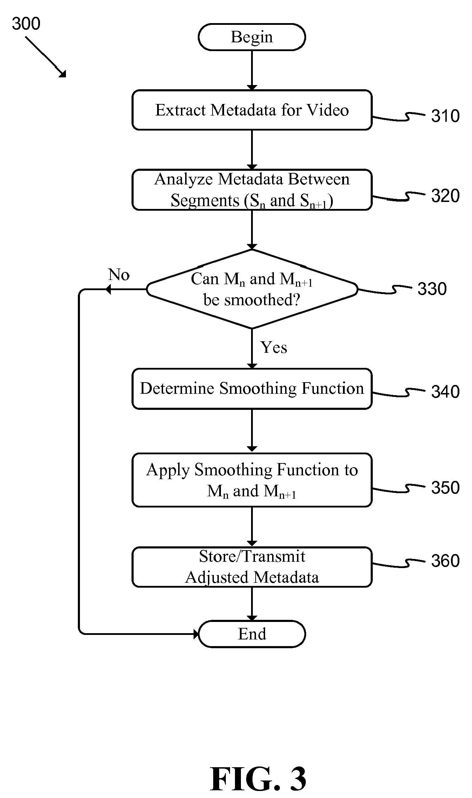

**Fig. 3** illustrates an exemplary process 300 some embodiments may use to smooth metadata-based enhancement. As illustrated, process 300 begins by extracting (at 310) metadata for all the segments that may have been pre-identified in a video. Then the process 300 may analyze (at 320) the extracted metadata between all the identified segments (e.g., between $S_n$ and $S_{n+1}$) in order to evaluate (at 330) whether smoothing can be applied to metadata between segments. If process 300 determines that two successive pieces of metadata between segments (e.g., $M_n$ and $M_{n+1}$) cannot be smoothed, the process will end.

For successive metadata that can be smoothed, the process 300 will determine (at 340) a smoothing function that is best suited for that metadata. The smoothing function selected may be based on the type of metadata being smoothed and/or the smoothness of the transition between the two segments. For example, some metadata may only require a continuous smoothing function, while other pieces of metadata may provide better enhancement via a linear smoothing function that may be interpolated between the metadata. In some embodiments, a weight may be computed which represents the smoothness of a transition between two segments. Furthermore, as discussed above, more complex functions may be provided in the form of geometric functions or custom function based on the metadata type being smoothed.

Next, the process 300 may apply (at 350) the smoothing function to the analyzed metadata. The application of the smoothing function may be applied to a transition that is defined by a pre-determined smoothing window (i.e.., time overlapping both segments where smoothing of metadata may be applied). Once the metadata is adjusted, the process 300 may store (at 360) the adjusted metadata on a non-transitory physical storage medium and/or transmit the adjusted metadata alongside its corresponding video stream. Some embodiments may store/tranmit the metadata using SEI messages in the corresponding encoded video stream. Furthermore, some embodiments may send the smoothing transitions and smoothing window via an SEI message and not affect the metadata directly, but rather only at rendering time based on the received smoothing function for each particular metadata or as a global smoothing function for all metadata between a particular transition.

The processes and modules described above may be implemented as software processes that are specified as one or more sets of instructions recorded on a non-transitory storage medium. When these instructions are executed by one or more computational element(s) (e.g., microprocessors, microcontrollers, digital signal processors (DSPs), application-specific integrated circuits (ASICs), field programmable gate arrays (FPGAs), etc.) the instructions cause the computational element(s) to perform actions specified in the instructions.

In some embodiments, various processes described above may be implemented completely using electronic circuitry that may include various sets of devices or elements (e.g., sensors, logic gates, analog to digital converters, digital to analog converters, comparators, etc.). Such circuitry may be able to perform functions and/or features that may be associated with various software elements described throughout.

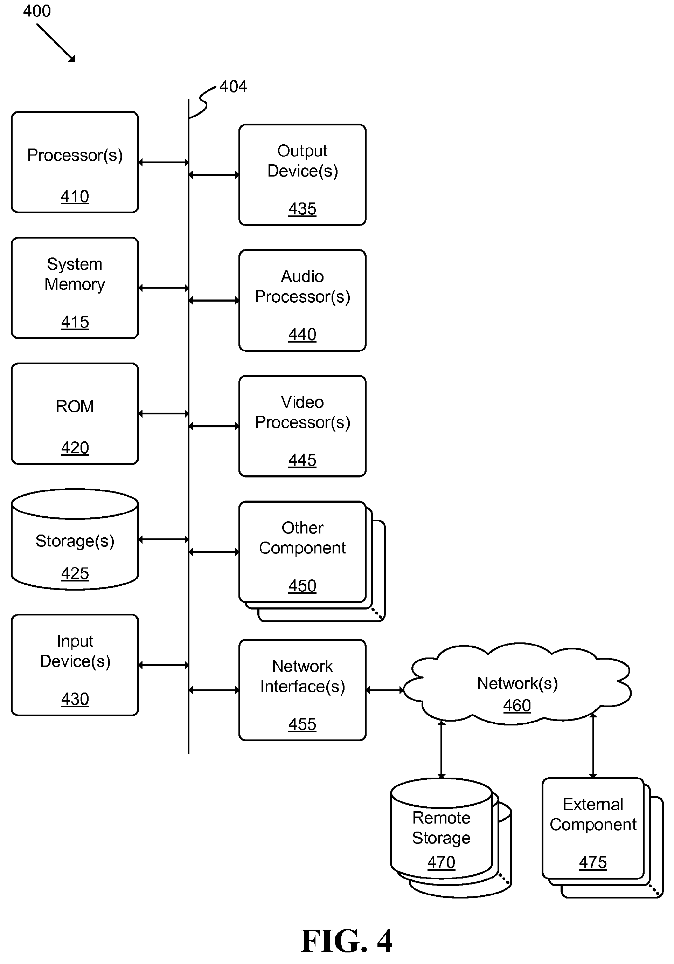

**Fig.4** illustrates a schematic block diagram of an exemplary computer system 400 used to implement some embodiments. The computer system 500 may be implemented in a video encoder or decoder, a computing apparatus used to extract metadata from video, aggregate metadata into an encoded stream via SEI messages, or a client device that interprets metadata during rendering of images. For example, the processes described in reference to **Figures 1** and **3** may be at least partially implemented using sets of instructions that are executed using computer system 400.

Computer system 400 may be implemented using various appropriate devices. For instance, the computer system may be implemented using one or more personal computers (PCs), servers, mobile devices (e.g., a smartphone), tablet devices, and/or any other appropriate devices. The various devices may work alone (e.g., the computer system may be implemented as a single PC) or in conjunction (e.g., some components of the computer system may be provided by a mobile device while other components are provided by a tablet device).

As shown, computer system 400 may include at least one communication bus 405, one or more processors 410, a system memory 415, a read-only memory (ROM) 420, permanent storage devices 425, input devices 430, output devices 435, audio processors 440, video processors 445, various other components 450, and one or more network interfaces 455.

Bus 405 represents all communication pathways among the elements of computer system 400. Such pathways may include wired, wireless, optical, and/or other appropriate communication pathways. For example, input devices 430 and/or output devices 435 may be coupled to the system 400 using a wireless connection protocol or system.

The processor 410 may, in order to execute the processes of some embodiments, retrieve instructions to execute and/or data to process from components such as system memory 415, ROM 420, and permanent storage device 425. Such instructions and data may be passed over bus 405.

System memory 415 may be a volatile read-and-write memory, such as a random access memory (RAM). The system memory may store some of the instructions and data that the processor uses at runtime. The sets of instructions and/or data used to implement some embodiments may be stored in the system memory 415, the permanent storage device 425, and/or the read-only memory 420. ROM 420 may store static data and instructions that may be used by processor 410 and/or other elements of the computer system.

Permanent storage device 425 may be a read-and-write memory device. The permanent storage device may be a non-volatile memory unit that stores instructions and data even when computer system 400 is off or unpowered. Computer system 400 may use a removable storage device and/or a remote storage device as the permanent storage device.

Input devices 430 may enable a user to communicate information to the computer system and/or manipulate various operations of the system. The input devices may include keyboards, cursor control devices, audio input devices and/or video input devices. Output devices 435 may include printers, displays, audio devices, etc. Some or all of the input and/or output devices may be wirelessly or optically connected to the computer system 400.

Audio processor 440 may process and/or generate audio data and/or instructions. The audio processor may be able to receive audio data from an input device 430 such as a microphone. The audio processor 440 may be able to provide audio data to output devices 440 such as a set of speakers. The audio data may include digital information and/or analog signals. The audio processor 440 may be able to analyze and/or otherwise evaluate audio data (e.g., by determining qualities such as signal to noise ratio, dynamic range, etc.). In addition, the audio processor may perform various audio processing functions (e.g., equalization, compression, etc.).

The video processor 445 (or graphics processing unit) may process and/or generate video data and/or instructions. The video processor may be able to receive video data from an input device 430 such as a camera. The video processor 445 may be able to provide video data to an output device 440 such as a display. The video data may include digital information and/or analog signals. The video processor 445 may be able to analyze and/or otherwise evaluate video data (e.g., by determining qualities such as resolution, frame rate, etc.). In addition, the video processor may perform various video processing functions (e.g., contrast adjustment or normalization, color adjustment, etc.). Furthermore, the video processor may be able to render graphic elements and/or video.

Other components 450 may perform various other functions including providing storage, interfacing with external systems or components, etc.

Finally, as shown in Figure 4, computer system 400 may include one or more network interfaces 455 that are able to connect to one or more networks 460. For example, computer system 400 may be coupled to a web server on the Internet such that a web browser executing on computer system 400 may interact with the web server as a user interacts with an interface that operates in the web browser. Computer system 400 may be able to access one or more remote storages 470 and one or more external components 475 through the network interface 455 and network 460. The network interface(s) 455 may include one or more application programming interfaces (APIs) that may allow the computer system 400 to access remote systems and/or storages and also may allow remote systems and/or storages to access computer system 400 (or elements thereof).

As used in this specification and any claims of this application, the terms "computer", "server", "processor", and "memory" all refer to electronic devices. These terms exclude people or groups of people. As used in this specification and any claims of this application, the term "non-transitory storage medium" is entirely restricted to tangible, physical objects that store information in a form that is readable by electronic devices. These terms exclude any wireless or other ephemeral signals.

It should be recognized by one of ordinary skill in the art that any or all of the components of computer system 400 may be used in conjunction with some embodiments. Moreover, one of ordinary skill in the art will appreciate that many other system configurations may also be used in conjunction with some embodiments or components of some embodiments.

In addition, while the examples shown may illustrate many individual modules as separate elements, one of ordinary skill in the art would recognize that these modules may be combined into a single functional block or element. One of ordinary skill in the art would also recognize that a single module may be divided into multiple modules.

The foregoing relates to illustrative details of exemplary embodiments and modifications may be made without departing from the scope of the disclosure as defined by the following claims.

**Claims**

1.  A method for smoothing transitions of metadata-based enhancements in video comprising:

    analyzing (320) a first metadata (215) for a first segment (210) and a second metadata (225) for a second segment (220), wherein the first segment (210) and second segment (220) are successive video segments; determining (340) a smoothing function for the first metadata and the second metadata; applying (350) the smoothing function to the first metadata (215) and the second metadata (225); and providing (360) a first smoothed metadata and a second smoothed metadata.

2.  The method of claim 1, wherein the smoothing function is determined based on the type of metadata to smooth.

3.  The method of claim 1, wherein the smoothing function is determined based on the transition between the first segment and the second segment.

4.  The method of claim 1 further comprising determining a weight to represent the transition between the first segment and the second segment.

5.  The method of claim 1, wherein the smoothing function is a continuous smoothing between the first metadata and the second metadata.

6.  The method of claim 1, wherein the smoothing function is a linear smoothing between the first metadata and the second metadata.

7.  The method of claim 1, wherein the smoothing function is a geometric smoothing between the first metadata and the second metadata.

8.  The method of claim 1 further comprising, determining a smoothing window for the transition, wherein the smoothing function is applied to the metadata only for a time period within the smoothing window.

9.  The method of claim 1 further comprising transmitting the first smoothed metadata and the second smoothed metadata during a previous segment.

10. An apparatus for smoothing transitions of metadata-based enhancements in video comprising:

    a processor for executing a set of instructions; and a non-transitory medium that stores the set of instructions, wherein the set of instructions comprises the method of claims 1-9.

**11.** A method for rendering smooth transitions of metadata-based enhancements in video comprising:

receiving a first metadata for a first segment and a second metadata for a second segment, wherein the first segment and second segment are successive video segments and the first metadata and second metadata have been smoothed according to the method of claims 1-9; and
applying (350) the metadata-based enhancements when rendering images of the video.

**12.** An apparatus for applying smooth transitions of metadata-based enhancements in video comprising:

a processor for executing a set of instructions; and
a non-transitory medium that stores the set of instructions, wherein the set of instructions comprises the method of claim 11.

**13.** Computer program comprising program code instructions executable by a processor for implementing the steps of a method according to at least one of claims 1 to 9.

100

Begin

Receive Video Catalog — 110

Extract Metadata — 120

Aggregate Metadata
with Content — 130

Transmit Aggregated Metadata
with Encoded Content — 140

End

FIG. 1

FIG. 2

300

Begin

Extract Metadata for Video ⟿ 310

Analyze Metadata Between
Segments ($S_n$ and $S_{n+1}$) ⟿ 320

Can $M_n$ and $M_{n+1}$
be smoothed? ⟿ 330

No

Yes

Determine Smoothing Function ⟿ 340

Apply Smoothing Function to
$M_n$ and $M_{n+1}$ ⟿ 350

Store/Transmit
Adjusted Metadata ⟿ 360

End

# FIG. 3

400

404

Processor(s)
410

System
Memory
415

ROM
420

Storage(s)
425

Input
Device(s)
430

Output
Device(s)
435

Audio
Processor(s)
440

Video
Processor(s)
445

Other
Component
450

Network
Interface(s)
455

Network(s)
460

Remote
Storage
470

External
Component
475

**FIG. 4**

Europäisches
Patentamt

European
Patent Office

Office européen
des brevets

## EUROPEAN SEARCH REPORT

Application Number

EP 15 30 7095

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/017314 A1 (DOLBY LAB LICENSING CORP [US]) 5 February 2015 (2015-02-05) * paragraphs [0065] - [066,] * ----- | 1-13 | INV.<br>H04N21/434<br>G06T5/00<br>H04N21/81 |
| X | US 2015/256846 A1 (HATTORI SHINOBU [JP] ET AL) 10 September 2015 (2015-09-10) * paragraphs [0084] - [0085], [0101] - [0103], [0122], [0134] * ----- | 1-13 | H04N21/845<br>H04N19/46<br>G11B27/30<br>H04N5/14<br>H04N19/142 |
| X | "Study of ISO/IEC DIS 23001-11 Green Metadata", 109. MPEG MEETING;7-7-2014 - 11-7-2014; SAPPORO; (MOTION PICTURE EXPERT GROUP OR ISO/IEC JTC1/SC29/WG11),, no. N14597, 22 July 2014 (2014-07-22), XP030021335, * paragraph [g.2.2.1] * ----- | 1-13 | |
| A | "Study Group Report High-Dynamic-Range (HDR) Imaging Ecosystem", , 19 September 2015 (2015-09-19), XP055250336, Retrieved from the Internet: URL:https://www.smpte.org/sites/default/files/Study Group On High-Dynamic-Range-HDR-Ecosystem.pdf [retrieved on 2016-02-16] * the whole document * ----- | 1-13 | |

TECHNICAL FIELDS
SEARCHED (IPC)

H04N
G06T
G11B

The present search report has been drawn up for all claims

| Place of search | Date of completion of the search | Examiner |
|---|---|---|
| Berlin | 27 May 2016 | Bertrand, Frédéric |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 30 7095

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2016

| Patent document cited in search report | | Publication date | Patent family member(s) | | Publication date |
|---|---|---|---|---|---|
| WO 2015017314 | A1 | 05-02-2015 | CN | 105409203 A | 16-03-2016 |
| | | | EP | 3028446 A1 | 08-06-2016 |
| | | | KR | 20160027975 A | 10-03-2016 |
| | | | TW | 201521435 A | 01-06-2015 |
| | | | WO | 2015017314 A1 | 05-02-2015 |
| US 2015256846 | A1 | 10-09-2015 | CN | 104902164 A | 09-09-2015 |
| | | | JP | 2015170904 A | 28-09-2015 |
| | | | US | 2015256846 A1 | 10-09-2015 |

EPO FORM P0459

For more details about this annex : see Official Journal of the European Patent Office, No. 12/82